# EUROPÄISCHE PATENTSCHRIFT

(11) **EP 3 039 330 B1**
(45) Veröffentlichungstag und Bekanntmachung des Hinweises auf die Patenterteilung: **12.04.2017**
(21) Anmeldenummer: 14744464.0
(22) Anmeldetag: 24.07.2014
(51) Int. Cl.: F16D 48/02, F16K 11/065, F16K 31/06, F16K 11/07, F16K 39/04

(54) **VENTIL NEBST SEINER VERWENDUNG FÜR EINE KUPPLUNG**
VALVE AND ITS USE WITH A CLUTCH
VALVE ET SON UTILISATION AVEC UN EMBRAYAGE

(30) Priorität: 31.08.2013 DE 102013014558
(43) Veröffentlichungstag der Anmeldung: 06.07.2016
(73) Patentinhaber: Hydac Fluidtechnik GmbH, 66280 Sulzbach/Saar (DE)
(72) Erfinder: HILZENDEGEN, Philipp, 66687 Wadern (DE); BRUCK, Peter, 66484 Althornbach (DE)
(74) Vertreter: Bartels, Martin Erich Arthur
(86) Internationale Anmeldenummer: PCT/EP2014/002026
(87) Internationale Veröffentlichungsnummer: WO 2015/028112

(56) Entgegenhaltungen:
- EP-A1- 1 582 791
- EP-A2- 1 455 127
- WO-A1-2011/100800
- US-A- 4 009 730

## Beschreibung

Die Erfindung betrifft ein Ventil, insbesondere ein Proportional-Druckregelventil, mit den Merkmalen im Oberbegriff von Anspruch 1. Die Erfindung betrifft des Weiteren die Verwendung eines solchen Ventils bei Kupplungen.

Dahingehende Ventile in Form sog. Proportional-Druckregelventile werden sehr häufig für mobile Arbeitsmaschinen zur elektrohydraulischen Ansteuerung von Kupplungen eingesetzt.

Diese Kupplungen müssen bei ihrer Betätigung zunächst mit einem Betätigungsfluid regelmäßig in Form von Öl gefüllt werden, bis ihre Reibflächen den Berührungspunkt erreichen, um als Kupplung wirken zu können. Dazu müssen in der Kupplung Federkräfte überwunden werden. Die von den Federkräften verursachten Drücke sind häufig sehr klein (kleiner als 2 bar) und eine weitere Erhöhung des Kupplungsdruckes führt dann zu Normalkräften an den Kupplungsbelägen, die letztendlich das Drehmoment durch Reibkräfte übertragen können.

Problematisch werden diese kleinen Federkräfte beim Abschalten der Kupplungen, weil zum Wegbewegen der jeweiligen Kupplungsscheibe von der zuordenbaren Anlauffläche nur die von diesen Federkräften verursachten Drücke zur Erzeugung des Ölflusses durch die Proportional-Druckregelventile zur Verfügung stehen.

Somit besteht bei diesen Ventilen die Forderung, dass der Druckverlust beim Durchströmen vom Arbeits- zum Tankanschluss extrem gering ausfallen soll, denn nur so ist ein schnelles und sicheres Abschalten der Kupplung möglich.

Beim jetzigen Stand der Technik wird bei direkt gesteuerten Proportional-Druckregelventilen durch den Einsatz von Magneten mit großen Arbeitshüben ein möglichst großer Strömungsquerschnitt geöffnet. Gleichzeitig wird dabei auch möglichst viel Magnetkraft gebraucht, um das Verhältnis zwischen Magnet- und Strömungskraft nicht zu ungünstig werden zu lassen. Somit werden große und teure Betätigungseinrichtungen in Form von Betätigungsmagneten benötigt.

Würde man nun, um diesen Nachteilen zu begegnen, was im Durchschnittskönnen eines Fachmanns auf dem Gebiet der Ventil- sowie der Kupplungstechnik liegt, von der Baugröße her kleine und insoweit auch preisgünstigere Betätigungsmagnete mit gleicher Kraft einsetzen wollen, so würde dies zwangsläufig die Länge des linearen Kraft-Hubbereichs verkleinern. Sofern man den vollen Öffnungsquerschnitt für das rasche Entleeren der Kupplung von Fluidmedium nicht verringern will, darf man den eigentlichen Ventilhub des Ventilkolbens nicht verkürzen, was aber wiederum unweigerlich zur Folge hat, dass die Federkräfte beim Einschalten des Ventils den Betätigungsmagneten in seinem nicht linearen Kraftbereich festhalten würden, so dass extrem viel Magnetstrom zum "Losreißen des Magneten" aus der Endlage benötigt würde.

In dem Moment aber, wo die Magnetkraft größer als die Federkraft wird, bewegt man sich auf dem stark ansteigenden Ast der Kraft-Hub-Kennlinie und das Gleichgewicht zwischen Magnet- und Federkraft würde zugunsten der Magnetkraft verloren gehen. Auf der P-I-Kennlinie des Ventils würde sich dies als Anfahrsprung bemerkbar machen mit der Folge, dass mit Lösen der Kupplung das Fahrzeug ruckartig losfährt, was insbesondere bei mobilen Arbeitsmaschinen aus Sicherheitsaspekten heraus unakzeptabel ist.

Die EP 1 582 791 A1 beschreibt ein Ventil, insbesondere ein Proportional-Druckregelventil, mit einem in einem Ventilgehäuse längsverfahrbar geführten und mittels einer Betätigungseinrichtung ansteuerbaren Ventilkolben, wobei das Ventilgehäuse mehrere Fluidanschlüsse aufweist und wobei in einer Verfahrstellung des Ventilkolbens eine fluidführende Verbindung zwischen einem Druckversorgungsanschluss und einem Nutzanschluss und in einer anderen Verfahrstellung eine weitere fluidführende Verbindung zwischen dem Nutzanschluss und einem Tankanschluss hergestellt ist, wobei der jeweilige Differenzdruck, der beim Durchströmen der weiteren fluidführenden Verbindung zwischen dem Nutzanschluss und dem Tankanschluss entsteht, mittels einer Ansteuereinrichtung derart auf den Ventilkolben einwirkt, dass dieser entgegen einer Anschlagposition, von der ausgehend die weitere fluidführende Verbindung zusehends unterbunden wird, in eine voll geöffnete Öffnungsstellung gelangt, bei der gegenüber der Anschlagposition ein vergrößerter Öffnungsquerschnitt von Nutzanschluss zu Tankanschluss erreicht ist.

Ausgehend von diesem Stand der Technik liegt der Erfindung die Aufgabe zugrunde, die bekannten Ventillösungen unter Beibehalten ihrer Vorteile dahingehend weiter zu verbessern, dass jedenfalls bei deren Einsatz im Kupplungsbereich die vorstehend beschriebenen Anfahrsprünge vermieden sind, wobei das Ventil kostengünstig in der Realisierung und funktionssicher im Betrieb sein soll.

Eine dahingehende Aufgabe löst ein Ventil mit den Merkmalen des Patentanspruchs 1 in seiner Gesamtheit.

Gemäß dem Kennzeichen von Anspruch 1 ist vorgesehen, dass die Anschlagposition durch einen mittels eines Energiespeichers beaufschlagten scheibenförmigen Anschlagkörper gebildet ist, der sich an feststehenden Teilen des Betätigungsmagneten in Form des Polkerns abstützt.

Dadurch, dass der jeweilige Differenzdruck, der beim Durchströmen der weiteren fluidführenden Verbindung zwischen dem Nutzanschluss und dem Tankanschluss entsteht, mittels einer Ansteuereinrichtung derart auf den Ventilkolben einwirkt, dass dieser entgegen einer Anschlagposition, von der ausgehend die weitere fluidführende Verbindung zusehends unterbunden wird, in eine voll geöffnete Öffnungsstellung gelangt, bei der gegenüber der Anschlagposition ein vergrößerter Öffnungsquerschnitt von Nutzanschluss zu Tankanschluss erreicht ist, ist eine Möglichkeit geschaffen, den Ventilkolbenhub zu vergrößern, ohne den Anfahrsprung der P-1-Kennlinie in Kauf nehmen zu müssen. Somit kann das erfindungsgemäße Ventil einen sehr großen Öffnungsquerschnitt beim Entlasten der Kupplung erzeugen und somit für eine schnelle Trennung der Kupplung sorgen.

Das erfindungsgemäße Ventil braucht nicht auf Anwendungen bei Kupplungen eingeschränkt zu sein, sondern kann vielmehr dort grundsätzlich Anwendung finden, wo man aus Platz- und/oder Kostengründen nur klein aufbauende Betätigungseinrichtungen in Form von Betätigungsmagneten zum Einsatz bringen kann bei gleichzeitiger Vergrößerung des freien Verfahrweges des Ventilkolbens über den möglichen Betätigungsbereich des Betätigungsmagneten hinaus, um dergestalt zu sehr großen Öffnungsquerschnitten zu kommen, die neben einer verbesserten Fluidabfuhr auch dazu dienen können, vermehrt Fluidmenge in hydraulische Systeme zu bringen.

Vorzugsweise ist dabei vorgesehen, dass die Ansteuereinrichtung mittels eines bevorzugt im Ventilgehäuse geführten Steuerkanals den jeweiligen Differenzdruck auf eine Kolbenringfläche des ansonsten druckausgeglichen gehaltenen Ventilkolbens führt, der unter dem Einfluss dieses Differenzdruckes, ausgehend von der Anschlagposition, in die voll geöffnete Öffnungsstellung gelangt. Mit Hilfe der Druckwirkung auf diese Kolbenringfläche, als Kreisringfläche bevorzugt konzipiert, erfolgt die angesprochene Druckregelung.

Wie vorstehend dargelegt und wie bei sonstigen vergleichbaren Ventilkonstruktionen üblich, wird also die Federkraft des genannten Energiespeichers nicht direkt auf den den Regelkolben bildenden Ventilkolben geleitet. Zwar ist auch bei der erfindungsgemäßen Ventillösung, wie üblich, zwischen dem Ventilkolben und der Druckfeder ein bevorzugt als Scheibe ausgebildeter Anschlagkörper eingebaut, der sich normalerweise mit dem Ventilkolben synchron bewegt und dabei die Federkraft überträgt zwecks Bewegen des Ventilkolbens in seine Ausgangsstellung, sofern der Betätigungsmagnet nicht bestromt ist; der Ventilkolben kann sich allerdings dann noch weiterbewegen und somit einen größeren Öffnungsquerschnitt ermöglichen, indem er differenzdruckgesteuert über die genannte Anschlagposition hinaus in seine voll geöffnete Öffnungsstellung gelangt. Die dahingehende weiterführende Bewegung erfolgt ohne Unterstützung der Federkraft ausschließlich unter dem Einfluss des Differenzdruckes, der beim Durchströmen des Ventils vom Nutzanschluss zum Tankanschluss hin zwangsläufig entsteht.

Wie vorstehend dargelegt wird also die Kupplung fluidführend zum Tankanschluss entlastet, indem man den Betätigungsmagneten abschaltet. Die angesprochene Federkraft drückt dabei den Ventilkolben in eine Position, die den Durchfluss vom Nutzanschluss, also vom Kupplungsverbraucher, zum Tankanschluss ermöglicht und der scheibenförmige Anschlagkörper stößt gegen den Polkern des Betätigungsmagneten an. Durch den anstehenden Differenzdruck auf die Kreisringfläche des Ventilkolbens wird der Kolben aber ohne die Federkraft nun in Richtung des Betätigungsmagneten verfahren, und sobald die Kupplung vollständig entleert ist, entfällt auch der Differenzdruck und somit die Krafteinwirkung auf den Ventilkolben. Der Ventilkolben befindet sich nunmehr in einem sog. indifferenten Zustand und beim erneuten Einschalten des Elektro-Betätigungsmagneten reicht jetzt bereits eine minimale Magnetkraft aus, um den Kolben wieder bis zum Berührungspunkt mit der Anschlagscheibe zu bewegen. Somit reicht bereits eine geringe Betätigungskraft des Magneten im nichtlinearen Bereich aus, um den Kolben aus diesem indifferenten Bereich herausbewegen zu können. Sobald der Berührungspunkt mit der Rückstellfeder erreicht ist, befindet sich der Elektro- oder Betätigungsmagnet in seinem linearen Bereich und die angesprochene P-I-Kennlinie kann ohne Anfahrsprung sauber abgefahren werden, so dass ein ruckfreies Einkuppeln gewährleistet ist.

Mit der Erfindung ist somit der Einsatz eines preisgünstigen Betätigungsmagneten mit einem geringen, linearen Hubbereich und dennoch hoher Magnetkraft erreicht ohne Einschränkung des für die verlustarme Durchströmung so wichtigen Ventilhubes.

Im Folgenden wird die erfindungsgemäße Ventillösung anhand eines Ausführungsbeispiels nach der Zeichnung näher erläutert.

Dabei zeigen in prinzipieller und nicht maßstäblicher Darstellung die
- Fig. 1: in der Art eines Längsschnitts das Gesamt-Ventil, ausgebildet als Proportional-Druckregelventil;
- Fig. 2: einen vergrößerten Bildausschnitt aus der Fig. 1, die das Ventil in einer Entlastungsstellung zeigt, mit einer teilweise freigegebenen Fluidverbindung vom Nutanschluss A zu Tankanschluss T ohne Zusatzhub;
- Fig. 3: eine der Fig. 1 entsprechende Längsschnittdarstellung, wobei das Ventil in der Überhubstellung mit vergrößertem Öffnungsquerschnitt von Nutzanschluss A nach Tankanschluss T gezeigt ist; und
- Fig. 4: einen der Fig. 2 entsprechenden vergrößerten Bildausschnitt nach der Fig. 3, jedoch mit auf der gegenüberliegenden Seite eingezeichnetem, mit einem Stopfen verschlossenem Ansteuerkanal.

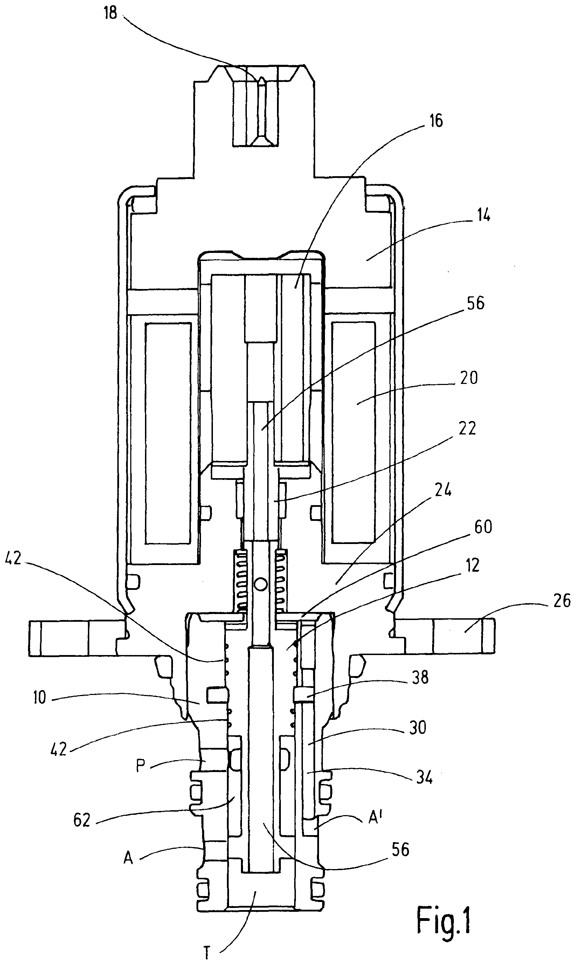

Das in den Figuren gezeigte Ventil ist als Proportional-Druckregelventil ausgebildet. Das Ventil weist einen in einem Ventilgehäuse 10 längsverfahrbar geführten Ventilkolben 12 auf. Der Ventil- oder Regelkolben 12 ist mittels einer Betätigungseinrichtung 14 in Form eines sog. Betätigungsmagneten für das Einnehmen seiner einzelnen Verfahrstellungen ansteuerbar. Der Betätigungsmagnet 14 ist nach dem Stand der Technik ausgeführt und weist zum Verfahren eines Magnetankers 16 eine mittels eines Steckers 18 bestrombare Spulenwicklung 20 auf. Der Betätigungsmagnet 14 ist als sog. drückender Magnet ausgeführt, d.h. bei Bestromung der Spulenwicklung 20 bewegt sich der Magnetanker 16 in Blickrichtung auf die Fig. 1 gesehen nach unten und übt über seinen Betätigungsstößel 22, der mit seinem freien stirnseitigen Ende in Anlage ist, mit dem einen freien Ende des Ventilkolbens 12 auf diesen eine Kraft aus, die eine Verfahrbewegung des Ventilkolbens 12 auslöst.

Der Betätigungsmagnet 14 ist druckdicht ausgeführt und sein Polkern 24 mündet endseitig in eine Flanschplatte 26 aus, mittels deren sich das Gesamtventil an einem nicht näher dargestellten Ventil- oder Steuerblock festlegen lässt. Vor dem dahingehenden Anschluss an einen solchen Gesamt-ventil- oder Steuerblock ist das Ventilgehäuse außenumfangsseitig in Cartridge-Bauweise als Einsteckteil entsprechend konzipiert und mit außenumfangsseitig angeordneten Dichtringen für den Anschluss an korrespondierende Fluidanschlussstellen im Ventil- oder Steuerblock ausgerüstet. Insbesondere weist hierfür das Ventilgehäuse 10 in radialer Richtung einen Druckversorgungsanschluss P sowie einen Nutzanschluss A und in axialer Richtung gesehen am freien stirnseitigen Ende des Ventilgehäuses 10 einen Tankanschluss T auf. Über den Druckversorgungsanschluss P lässt sich beispielsweise Hydraulikfluid einer vorgebbaren Menge und eines vorgebbaren Druckes, beispielsweise von einer Hydropumpe (nicht dargestellt) stammend, dem Ventil mit seinen weiteren Anschlüssen A, T zuführen. Für die hier besonders bevorzugt angesprochene Verwendung des Ventils bei Kupplungen ist der Nutzanschluss A an eine dahingehende Kupplungseinrichtung (nicht dargestellt) angeschlossen. Sofern hier von einem Tankanschluss T die Rede ist, kann dies auch eine übliche Rückführleitung betreffen, die nicht zwingend in einen Vorratstank einmünden muss, die aber jedenfalls einen geringeren Druck aufzuweisen hat, beispielsweise in der Größe des Tank- oder Umgebungsdruckes, der generell niedriger ist als der Druck an dem Druckversorgungsanschluss P sowie an dem Nutzanschluss A.

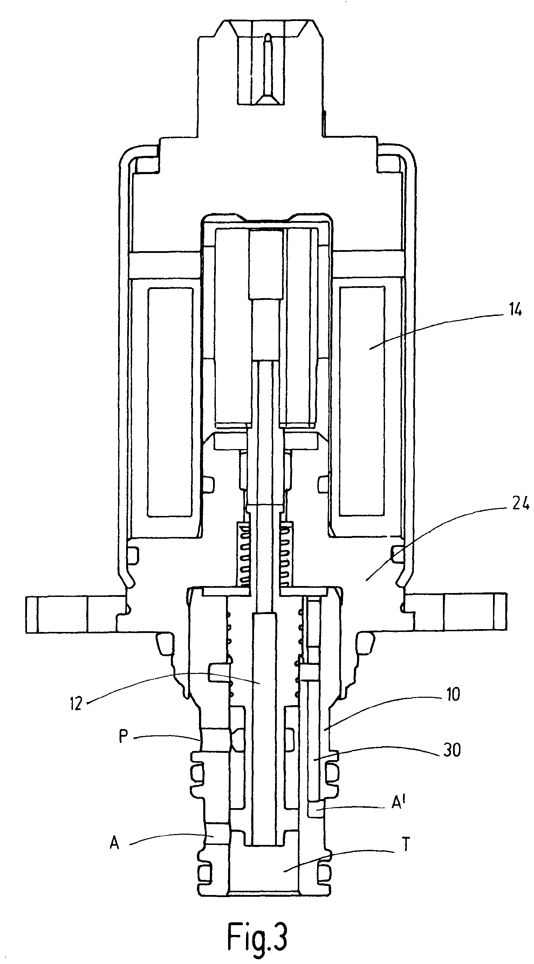

Der vorstehend beschriebene Aufbau eines Ventils ist bekannt. Demgegenüber unterscheidet sich die erfindungsgemäße Lösung unter anderem dadurch, dass der jeweilige Differenzdruck, der beim Durchströmen der fluidführenden Verbindung zwischen dem Nutzanschluss A und dem Tankanschluss T entsteht, mittels einer Ansteuereinrichtung 30 derart auf den Ventilkolben 12 einwirkt, dass dieser entgegen einer Anschlagposition 32 gemäß der Darstellung nach der Fig. 1 in eine voll geöffnete Öffnungsstellung gelangt, bei der gegenüber der Anschlagposition 32 (vgl. Fig. 1) ein demgegenüber vergrößerter Öffnungsquerschnitt von Nutzanschluss A zu Tankanschluss T erreicht ist (vgl. Fig. 3).

Die Ansteuereinrichtung 30 weist hierfür einen im Ventilgehäuse 10 in axialer Richtung verlaufenden Steuerkanal 34 auf, der den jeweiligen Differenzdruck auf eine Kolbenringfläche 36 des ansonsten druckausgeglichen gehaltenen Ventilkolbens 12 führt, der unter dem Einfluss dieses Differenzdruckes, ausgehend von der Anschlagposition 32, in die voll geöffnete Öffnungsstellung (vgl. Fig. 3) verfahren kann.

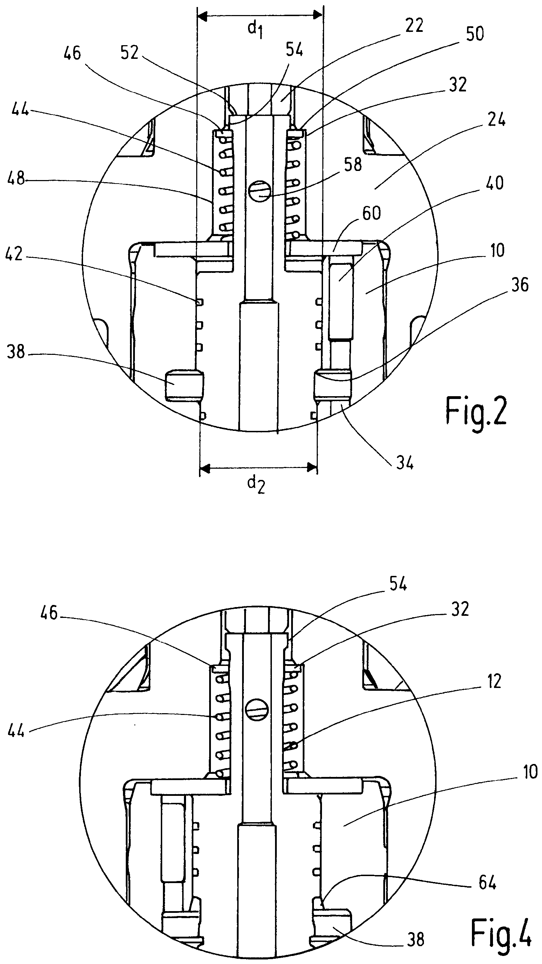

Die angesprochene druckwirksame Kolbenringfläche 36 ergibt sich aus der Durchmesserdifferenz d₁-d₂ (vgl. Fig. 2) des Ventilkolbens 12 in seinem oberen gestuften Absatzbereich. Der Steuerkanal 34 mündet in eine im Durchmesser erweiterte Fluidkammer 38 des Ventilgehäuses 10 aus, in der in jeder Verfahrstellung des Ventilkolbens 12 dessen eine Kolbenringfläche 36 geführt ist, die sich, wie bereits dargelegt, aus einem gestuften Übergang unterschiedlicher Kolbendurchmesser d₁/d₂ des Ventilkolbens 12 ergibt, der sich in Richtung des Tankanschlusses T dergestalt verjüngt.

In Blickrichtung auf die Fig. 1 und 2 gesehen mündet der Steuerkanal 34 an seinem oberen freien Ende in axialer Richtung aus dem Ventilgehäuse 10 an dessen freier Stirnseite aus und ist dort in abgedichteter Weise von einem Verschlussstopfen 40 abgedichtet. Am unteren Ende mündet der Steuerkanal 34 in einer Querführung in die Anschlussstelle A' aus, an die über den nicht näher dargestellten Ventil- oder Steuerblock der jeweilige Druck zwischen Nutzanschluss A und Tankanschluss T permanent ansteht. Dabei gilt, dass der Druck A' dem Druck A entspricht. Soweit der Steuerkanal 34 am oberen Ende von dem Verschlussstopfen 40 verschlossen ist, lässt dieser jedenfalls den Zugang des Steuerkanals 34 zu der Fluidkammer 38 frei. Um die Fluidkammer 38 gegenüber dem Betätigungsmagneten 14 sowie gegenüber dem Druckversorgungsanschluss P abdichten zu können, weist der Ventilkolben außenumfangsseitig in üblicher Bauweise kanalartige Fluidabdichtungen sowie eine Druckzentriernut 42 auf.

Die bereits angesprochene Anschlagposition 32 wird dem Grunde nach durch einen mittels eines Energiespeichers in Form einer Druckfeder 44 beaufschlagten scheibenförmigen Anschlagkörper 46 gebildet, der hierfür sich an feststehenden Teilen des Betätigungsmagneten 14 in Form des Polkerns 24 abstützt. Für die Aufnahme der Druckfeder 44 weist der Polkern 24 eine zylindrische kammerförmige Ausnehmung 48 auf, die sich zum freien Ende des Betätigungsstößels 22 hin im Durchmesser verringert, um dergestalt eine Anschlagschulter 50 auszubilden, gegen die stirnseitig die Scheibe 46 anschlagen kann.

Gemäß der Darstellung nach den Figuren durchgreift der Ventilkolben 12 mit seinem im Durchmesser verjüngten Ende 52 eine zylindrische Mittenausnehmung des scheibenförmigen Anschlagkörpers 46 und weist im Bereich seines freien Endes 52 eine Durchmesserverbreiterung in der Art eines Mitnehmers 54 auf, der gemäß der Darstellung nach den Fig. 1 und 2 von oben her die Scheibe 46 unter Anlage mit derselben übergreift. Mit Betätigen der Betätigungseinrichtung 14 wird der Anschlagkörper 46 entgegen der Wirkung des Energiespeichers in Form der Druckfeder 44 aus der Anschlagposition 32 heraus in eine maximal mögliche Wirkposition verfahren, bei der die fluidführende Verbindung zwischen dem Versorgungsanschluss P und dem Nutzanschluss A hergestellt und die von Nutzanschluss A zu Tankanschluss T vollständig unterbunden ist (nicht dargestellt). In dieser Ventilstellung lässt sich dann die Kupplung, die am Nutzanschluss A angeschlossen ist, mit einem Fluid vorgebbaren Drucks in vorgebbarer Menge vom Druckversorgungsanschluss P her versorgen und wie eingangs beschrieben lassen sich dann die Kupplungsscheiben unter Überwindung von Kupplungs-Federkräften zwecks Übertragen eines Drehmoments durch Reibkräfte sukzessive in Anlage miteinander bringen.

Um einen vollständigen Druckausgleich sowohl innerhalb des Betätigungsmagneten 14 als auch für den Ventilkolben 12 herstellen zu können, ist sowohl der Ventilkolben 12 als auch das stangenförmige Betätigungsteil 22 in Form des Betätigungsstößels mit einem durchgehenden Druckausgleichskanal 56 versehen, der an seinem einen freien Ende in Richtung des Tankanschlusses T ausmündet und an seinem anderen freien Ende in Anlage mit Teilen des verfahrbaren Magnetankers 16 kommt. Wie des Weiteren die einzelnen Figuren zeigen, mündet der Druckausgleichskanal 56 über eine Querbohrung 58 in die zylindrische Ausnehmung 48 aus, die innerhalb des Polkerns 24 die Federkammer für die Druckfeder 44 ausbildet. Die Druckfeder 44 ist mit ihrem in Blickrichtung auf die Figuren gesehen oberen freien Ende in direkter Anlage mit dem scheibenförmigen Anschlagkörper 46 und mit ihrem anderen unteren Ende in Anlage mit einer Abschlussscheibe 60, die zwischen dem einen freien Ende des Ventilgehäuses 10 und dem benachbarten stirnseitigen Ende des Polkerns 24 druckdicht festgelegt ist.

Bei Einnahme der Anschlagposition 32 durch den Ventilkolben 12 weist dieser eine weitere Durchmesserreduzierung 62 mit derart einer axialen Länge auf, dass jedenfalls der Versorgungsanschluss P freigelassen und der Nutzanschluss A vom Ventilkolben 12 gesperrt sein kann, wobei beim Bewegen des Ventilkolbens 12 unter dem Einfluss der Betätigungseinrichtung 14 in Richtung des Tankanschlusses T, also in Blickrichtung auf die Figuren gesehen nach unten hin, die Verbindung zwischen Versorgungsanschluss P und Nutzanschluss A zusehends hergestellt ist und die Verbindung des Nutzanschlusses A zum Tankanschluss T gesperrt wird.

Zum Entkuppeln der nicht näher dargestellten Kupplung ist diese fluidführend zum Tankanschluss T hin zu entlasten, wozu der Betätigungsmagnet 14 vorher abgeschaltet sein muss. Die Federkraft der Druckfeder 44 drückt dabei den Ventilkolben 12 in eine Position, die den Durchfluss von Nutzanschluss A zum Tankanschluss T ermöglicht, wobei die Scheibe 46 unter Einnahme der Anschlagposition 32 gegen den Polkern 24 verfährt. Die dahingehende Ventil-Entlastungsstellung von Nutzanschluss A nach Tankanschluss T ohne Zusatzhub ist in den Fig. 1 und 2 dargestellt.

Ausgehend von dieser Anschlagposition 32 kann sich nun aber der Ventilkolben 12 gemäß den Darstellungen nach den Fig. 3 und 4 weiter nach oben bewegen, wobei sich der Mitnehmer 54 von der oberen Stirnseite der Scheibe 46 entfernt und dabei einen größeren Öffnungsquerschnitt ermöglicht zwischen dem Nutzanschluss A und dem Tankanschluss T. Die Fig. 3 und 4 zeigen das Ventil in der dahingehenden Überhubstellung. Diese Überhubbewegung des Ventilkolbens 12 erfolgt ohne Unterstützung der Federkraft der Druckfeder 44, indem man sich den Differenzdruck an der Anschlussstelle A' des Steuerkanals 34 zunutze macht, der beim Durchströmen des Ventils vom Nutzanschluss A zum Tankanschluss T zwangsläufig entsteht. Dieser Differenzdruck an der Anschlussstelle A' wirkt auf die Kreisringfläche 36 des Kolbens 12 ein und bewegt diesen ohne die Federkraft, in Blickrichtung auf die Fig. 3 und 4 gesehen, weiter nach oben. Wenn die Kupplung fluidmäßig vollständig entleert ist, indem die Kupplungsfedern die einzelnen Kupplungsscheiben wiederum auf Abstand zueinander gebracht haben, entfällt der Differenzdruck und somit die Kraftwirkung auf den Ventilkolben 12. Damit befindet sich der Ventilkolben 12 in einem indifferenten Zustand und beim erneuten Einschalten des Betätigungsmagneten 14 reicht jetzt eine minimale Kraft aus, um den Ventilkolben 12 wieder bis zum Berührungspunkt mit der Scheibe 46 zu bewegen, bei der der Mitnehmer 54 erneut an der Scheibe 46 anschlägt. Wenn dieser Berührungspunkt gemäß der Darstellung nach den Fig. 1 und 2 mit der Druckfeder 44 erreicht ist, befindet sich der Betätigungs- oder Elektromagnet 14 in seinem linearen Bereich, so dass die sog. P-I-Kennlinie ohne Anfahrsprung sauber abgefahren werden kann. Wie insbesondere die Fig. 4 weiter zeigt, ist die Fluidkammer 38 nach oben hin konisch verjüngt, so dass ein konischer Übergangsbereich 64 gebildet ist zwischen der im Durchmesser deutlich erweiterten Fluidkammer 38 gegenüber dem Durchmesser d₁ des Ventilkolbens 12 innerhalb seines Ventilgehäuses 10.

Insgesamt ist mit der erfindungsgemäßen Ventilkonstruktion der Einsatz eines preisgünstigen Betätigungsmagneten mit einem geringen, linearen Hubbereich und somit hoher Magnetkraft ohne Einschränkung des für die verlustarme Durchströmung so wichtigen Gesamt-Ventilhubes erreicht.

## Patentansprüche

1. Ventil, insbesondere ein Proportional-Druckregelventil, mit einem in einem Ventilgehäuse (10) längsverfahrbar geführten und mittels einer Betätigungseinrichtung (14) in Form eines Betätigungsmagneten (14) ansteuerbaren Ventilkolben (12), wobei das Ventilgehäuse (10) mehrere Fluidanschlüsse (P, A, T) aufweist und wobei in einer Verfahrstellung des Ventilkolbens (12) eine fluidführende Verbindung zwischen einem Druckversorgungsanschluss (P) und einem Nutzanschluss (A) und in einer anderen Verfahrstellung eine weitere fluidführende Verbindung zwischen dem Nutzanschluss (A) und einem Tankanschluss (T) hergestellt ist, wobei der jeweilige Differenzdruck, der beim Durchströmen der weiteren fluidführenden Verbindung zwischen dem Nutzanschluss (A) und dem Tankanschluss (T) entsteht, mittels einer Ansteuereinrichtung (30) derart auf den Ventilkolben (12) einwirkt, dass dieser entgegen einer Anschlagposition (32), von der ausgehend die weitere fluidführende Verbindung zusehends unterbunden wird, in eine voll geöffnete Öffnungsstellung gelangt, bei der gegenüber der Anschlagposition (32) ein vergrößerter Öffnungsquerschnitt von Nutzanschluss (A) zu Tankanschluss (T) erreicht ist, **dadurch gekennzeichnet, dass** die Anschlagposition (32) durch einen mittels eines Energiespeichers (44) beaufschlagten scheibenförmigen Anschlagkörper (46) gebildet ist, der sich an feststehenden Teilen des Betätigungsmagneten (14) in Form des Polkerns (24) abstützt.

2. Ventil nach Anspruch 1, **dadurch gekennzeichnet, dass** die Ansteuereinrichtung (30) mittels eines bevorzugt im Ventilgehäuse (10) geführten Steuerkanals (34) den jeweiligen Differenzdruck auf eine Kolbenringfläche (36) des ansonsten druckausgeglichen gehaltenen Ventilkolbens (12) führt, der unter dem Einfluss dieses Differenzdruckes, ausgehend von der Anschlagposition (32), in die voll geöffnete Öffnungsstellung (Fig. 3) gelangt.

3. Ventil nach Anspruch 1 oder 2, **dadurch gekennzeichnet, dass** der Energiespeicher eine Druckfeder (44) ist.

4. Ventil nach einem der vorstehenden Ansprüche, **dadurch gekennzeichnet, dass** der Anschlagkörper aus einer Scheibe (46) mit Mittenausnehmung gebildet ist, dass die Scheibe (46) in der Anschlagposition (32) sich stirnseitig am Polkern (24) des Betätigungsmagneten (14) abstützt, und dass die Druckfeder (44) sich mit ihrem einen freien Ende an der Scheibe (46) abstützt und mit ihrem anderen freien Ende an einer Abschlussscheibe (60), die zwischen Ventilgehäuse (10) und dem Polkern (24) festgelegt ist.

5. Ventil nach einem der vorstehenden Ansprüche, **dadurch gekennzeichnet, dass** der Ventilkolben (12) mit seinem einen freien Ende (52) den Anschlagkörper (46) durchgreift und im Bereich dieses freien Endes (52) einen Mitnehmer (54) aufweist, der den Anschlagkörper (46) mit Betätigen der Betätigungseinrichtung (14) entgegen der Wirkung des Energiespeichers (44) aus der Anschlagposition (32) heraus in eine maximal mögliche Wirkposition verfährt, bei der die fluidführende Verbindung zwischen Versorgungsanschluss (P) und Nutzanschluss (A) hergestellt und die von Nutzanschluss (A) zu Tankanschluss (T) unterbunden ist.

6. Ventil nach einem der vorstehenden Ansprüche, **dadurch gekennzeichnet, dass** die Betätigungseinrichtung (14) aus einem drückend wirkenden Betätigungsmagneten gebildet ist und dass sowohl der Ventilkolben (12) als auch das stangenförmige Betätigungsteil (22) des Betätigungsmagneten (14) einen durchgehenden Druckausgleichskanal (56) aufweisen, der auf seiner einen Seite unabhängig von der Verfahrposition des Ventilkolbens (12) in den Tankanschluss (T) ausmündet.

7. Ventil nach einem der vorstehenden Ansprüche, **dadurch gekennzeichnet, dass** der Steuerkanal (34) in eine im Durchmesser erweiterte Fluidkammer (38) des Ventilgehäuses (10) ausmündet, in der in jeder Verfahrstellung des Ventilkolbens (12) dessen eine Kolbenringfläche (36) geführt ist, die sich aus einem gestuften Übergang unterschiedlicher Kolbendurchmesser (d₁/d₂) des Ventilkolbens (12) ergibt, der sich in Richtung des Tankanschlusses (T) dergestalt verjüngt.

8. Ventil nach einem der vorstehenden Ansprüche, **dadurch gekennzeichnet, dass** der Steuerkanal (34) bei seinem einen endseitigen Austritt aus dem Ventilgehäuse (10) in diesem Bereich von einem Verschlussstopfen (40) verschlossen ist, der den Eintritt des Steuerkanals (34) in die Fluidkammer (38) freilässt, und dass das andere Ende des Steuerkanals in eine Anschlussstelle (A') ausmündet, die den Differenzdruck zwischen Nutzanschluss (A) und Tankanschluss (T) abgreift.

9. Ventil nach einem der vorstehenden Ansprüche, **dadurch gekennzeichnet, dass** bei Einnahme der Anschlagposition (32) durch den Ventilkolben (12) dieser eine weitere Durchmesserreduzierung (62) mit derart einer axialen Länge aufweist, dass der Versorgungsanschluss (P) freigelassen und der Nutzanschluss (A) vom Ventilkolben (12) gesperrt ist, und dass bei Bewegen des Ventilkolbens (12) unter dem Einfluss der Betätigungseinrichtung (14) in Richtung des Tankanschlusses (T) die fluidführende Verbindung zwischen Versorgungsanschluss (P) und Nutzanschluss (A) zusehends hergestellt ist.

10. Verwendung eines Ventils gemäß einem der vorstehenden Ansprüche bei einer Kupplung, bestehend aus mindestens zwei Kupplungsscheiben, die entgegen der Wirkung eines Kupplungs-Energiespeichers unter dem Betätigungsdruck am Nutzanschluss (A) des betätigten Ventils im gekuppelten Zustand eine Reibschlussverbindung miteinander eingehen und die im entkuppelten Zustand unter dem Einfluss des Kupplungs-Energiespeichers Betätigungsfluid bei nicht betätigtem Ventil vom Nutzanschluss (A) zum Tankanschluss (T) ausschiebt, mit einem ersten Öffnungsquerschnitt bis zum Erreichen der Anschlagposition (32) und mit einem demgegenüber größeren Öffnungsquerschnitt beim Weiterbewegen des Ventilkolbens (12) von der Anschlagposition (32) weg in Richtung des Ankers (16) der Betätigungseinrichtung (14).

11. Verwendung nach Anspruch 10, **dadurch gekennzeichnet, dass** nach vollständigem Entkuppeln der Ventilkolben (12) sich in einer Art indifferentem Zustand befindet, so dass zum Betätigen der Kupplung mit erneutem Einschalten der Betätigungseinrichtung (14) eine minimale Magnetkraft ausreicht, um den Ventilkolben (12) bis zum Berühren des Anschlagkörpers (14, 40) in seine Anschlagposition zu verfahren.

## Claims

1. A valve, in particular a proportional pressure regulating valve, that has a valve piston (12) guided so as to be able to be displaced longitudinally within a valve housing (10) and that can be controlled by means of an actuator device (14) in the form of an actuating magnet (14), the valve housing (10) having a number of fluid ports (P, A, T), and in a movement position of the valve piston (12), a fluid-conveying connection being established between a pressure supply port (P) and a utility port (A), and in another movement position, another fluid-conveying connection being established between the utility port (A) and a tank port (T), the respective differential pressure that arises during the flow through the further fluid-conveying connection between the utility port (A) and the tank port (T) acting on the valve piston (12) by means of a control device (30) in such a way that this valve piston acts against a stop position (32), from which the further fluid-conveying connection is visibly blocked, into a fully opened opening position in which, compared to the stop position (32), an enlarged opening cross-section from the utility port (A) to the tank port (T) is achieved, **characterised in that** the stop position (32) is formed by a disc-shaped stop element (46) that is pressurised by means of an energy accumulator (44), which stop element is supported on fixed parts of the actuating magnet (14) in the form of the pole core (24).

2. The valve according to Claim 1, **characterised in that** the control device (30) guides the respective differential pressure, by means of a control duct (34) preferably guided within the valve housing (10), to a piston ring surface (36) of the otherwise pressure-equalised valve piston (12) which, starting from the stop position (32), passes into the fully opened opening position (Fig. 3) under the influence of this differential pressure.

3. The valve according to Claim 1 or 2, **characterised in that** the energy accumulator is a compression spring (44).

4. The valve according to any of the preceding claims, **characterised in that** the stop element is formed from a disc (46) with a central recess, that in the stop position (32) the disc (46) is supported on the front end on the pole core (24) of the actuating magnet (14), and that the compression spring (44) is supported with its one free end on the disc (46), and with its other free end is supported on a termination disc (60) that is affixed between the valve housing (10) and the pole core (24).

5. The valve according to any of the preceding claims, **characterised in that** with its one free end (52) the valve piston (12) penetrates the stop element (46) and, in the region of this free end (52), has a catch (54) which, upon actuating the actuator device (14), moves the stop element (46) against the action of the energy accumulator (44) out of the stop position (32) into a maximum possible effective position in which the fluid-conveying connection between the supply port (P) and the utility port (A) is established, and the connection from the utility port (A) to the tank port (T) is blocked.

6. The valve according to any of the preceding claims, **characterised in that** the actuator device (14) is formed from a push-action actuating magnet, and that both the valve piston (12) and the rod-shaped actuating part (22) of the actuating magnet (14) have a continuous pressure-equalizing duct (56) which opens on its one side into the tank port (T) independently of the movement position of the valve piston (12).

7. The valve according to any of the preceding claims, **characterised in that** the control duct (34) opens into a fluid chamber (38) of the valve housing (10), which fluid chamber has an expanded diameter, and in which, in every movement position of the valve piston (12), its one piston ring surface (36) is guided which results from a stepped transition of different piston diameters (d₁/d₂) of the valve piston (12) which thus tapers in the direction of the tank port (T).

8. The valve according to any of the preceding claims, **characterised in that** at its one end-side outlet from the valve housing (10), the control duct (34) is closed in this region by a closure plug (40) which leaves the inlet of the control duct (34) into the fluid chamber (38) open, and that the other end of the control duct opens into a connection point (A') which picks up the differential pressure between the utility port (A) and the tank port (T).

9. The valve according to any of the preceding claims, **characterised in that** upon assuming the stop position (32), the valve piston (12) has a further reduction in diameter (62) with an axial length such that the supply port (P) is left open and the utility port (A) is blocked by the valve piston (12), and that upon moving the valve piston (12) under the influence of the actuator device (14) in the direction of the tank port (T) the fluid-conveying connection between the supply port (P) and the utility port (A) is visibly established.

10. The use of a valve according to any of the preceding claims in a clutch, consisting of at least two clutch discs which, in the coupled state, establish a frictional connection with each other against the action of a clutch energy accumulator under the actuating pressure at the utility port (A) of the actuated valve and, in the uncoupled state, under the influence of the clutch energy accumulator, pushes operating fluid from the utility port (A) to the tank port (T) with the valve not being actuated, having a first opening cross-section until reaching the stop position (32) and having a comparatively larger opening cross-section with further movement of the vale piston (12) away from the stop position (32) in the direction of the armature (16) of the actuator device (14).

11. The use according to Claim 10, **characterised in that** after complete decoupling, the valve piston (12) is in a type of indifferent state so that, upon actuating the clutch by switching on the actuator device (14) once again, a minimum magnetic force is sufficient to move the valve piston (12) into its stop position until it makes contact with the stop element (14, 40).

## Revendications

1. Soupape, notamment soupape de réglage de la pression proportionnelle, comprenant un piston (12) de soupape guidé de manière déplaçable longitudinalement dans un corps (10) de soupape et pouvant être commandé au moyen d'un dispositif (14) d'actionnement sous la forme d'un aimant (14) d'actionnement, le corps (10) de la soupape ayant plusieurs raccords (P, A, T) pour du fluide et dans une position de déplacement du piston (12) de la soupape, une liaison fluidique entre un raccord (P) d'alimentation en pression et un raccord (A) utile et dans une autre position de déplacement, une autre liaison fluidique entre le raccord (A) utile et un raccord (T) de réservoir étant produites, la différence de pression qui, lors du passage dans l'autre liaison fluidique, se crée entre le raccord (A) utile et le raccord (T) de réservoir, agissant au moyen d'un dispositif (30) de commande sur le piston (12) de la soupape, de manière à ce que celui-ci, à l'encontre d'une position (32) de butée à partir de laquelle l'autre liaison fluidique est supprimée à vue d'oeil, arrive dans une position d'ouverture ouverte complètement dans laquelle, par rapport à la position (32) de butée, une section transversale d'ouverture agrandie du raccord (A) utile par rapport au raccord (T) de réservoir est obtenue, **caractérisée en ce que** la position (32) de butée est formée par un corps (46) de butée en forme de disque, qui est soumis à un accumulateur (44) d'énergie et qui s'appuie sur des parties fixes de l'élément (14) d'actionnement sous la forme du noyau (24) polaire.

2. Soupape suivant la revendication 1, **caractérisée en ce que** le dispositif (32) de commande conduit, au moyen d'un conduit (34) de commande, de préférence, guidé dans le corps (10) de la soupape, la pression différentielle sur une surface (36) annulaire du piston (12) de la soupape, sinon maintenu avec compensation de la pression, piston qui, sous l'influence de cette pression différentielle, arrive en partant de la position (32) de butée dans la position d'ouverture ouverte entièrement (fig.3).

3. Soupape suivant la revendication 1 ou 2, **caractérisée en ce que** l'accumulateur d'énergie est un ressort (44) de compression.

4. Soupape suivant l'une des revendications précédentes, **caractérisée en ce que** le corps de butée est formé d'un disque (46) ayant un évidement au milieu, **en ce que** le disque (46) s'appuie dans la position (32) de butée du côté frontal sur le noyau (24) polaire de l'aimant (14) d'actionnement et **en ce que** le ressort (44) de compression s'appuie sur le disque (46) par l'une de ses extrémités libres et par son autre extrémité libre sur un disque (60) de fermeture fixé entre le corps (10) de la soupape et le noyau (24) polaire.

5. Soupape suivant l'une des revendications précédentes, **caractérisée en ce que** le piston (12) de la soupape traverse par l'une de ses extrémités (52) libres le corps (46) de butée et a, dans la région de cette extrémité (52) libre, un toc (54) d'entraînement, qui déplace le corps (46) de butée avec actionnement du dispositif (14) d'actionnement à l'encontre de l'effet de l'accumulateur (44) d'énergie de la position (32) de butée à une position efficace possible au maximum, dans laquelle la liaison fluidique entre le raccord (P) d'alimentation et le raccord (A) utile est produite et celle du raccord (A) utile au raccord (T) de réservoir est supprimée.

6. Soupape suivant l'une des revendications précédentes, **caractérisée en ce que** le dispositif (14) d'actionnement est formé d'un aimant d'actionnement agissant en poussée et **en ce qu'**à la fois le piston (12) de la soupape et la partie (22) d'actionnement en forme de tige de l'aimant (14) d'actionnement ont un conduit (56) continu de compensation de la pression, qui débouche sur l'un de ses côtés indépendamment de la position en déplacement du piston (12) de la soupape dans le raccord (T) de réservoir.

7. Soupape suivant l'une des revendications précédentes, **caractérisée en ce que** le conduit (34) de commande débouche dans une chambre (38) pour du fluide de diamètre agrandi du corps (10) de la soupape, dans laquelle, dans chaque position en déplacement du piston (12) de la soupape, une surface (36) annulaire de piston est guidée, surface qui provient d'une transition étagée de diamètre (d₁/d₂) différent du piston (12) de la soupape, qui se rétrécit en direction du raccord (T) de réservoir.

8. Soupape suivant l'une des revendications précédentes, **caractérisée en ce que** le conduit (34) de commande est fermé à sa sortie du côté de l'extrémité du corps (10) de la soupape dans cette région par un bouchon (40) de fermeture, qui dégage l'entrée du conduit (34) de commande dans la chambre (38) pour un fluide et **en ce que** l'autre extrémité du conduit de commande débouche dans un point (A') de raccordement, qui détecte la différence de pression entre le raccord (A) utile et le raccord (T) de réservoir.

9. Soupape suivant l'une des revendications précédentes, **caractérisée en ce que**, lorsque la position (32) de butée est prise par le piston (12) de la soupape, celui-ci a une autre réduction (62) de diamètre en ayant une longueur axiale telle que le raccord (P) d'alimentation est dégagé et que le raccord (A) utile est fermé par le piston (12) de la soupape et **en ce que**, lorsque le piston (12) de la soupape se déplace sous l'influence du dispositif (14) d'actionnement en direction du raccord (T) de réservoir, la liaison fluidique entre le raccord (P) d'alimentation et le raccord (A) utile est produite à vue d'oeil.

10. Utilisation d'une soupape suivant l'une des revendications précédentes dans un embrayage, consistant en au moins deux disques d'embrayage qui, à l'encontre de l'effet d'un accumulateur d'énergie d'embrayage sous la pression d'actionnement au raccord (A) utile de ladite soupape, entrent, à l'état embrayé l'un avec l'autre, dans une liaison à un frottement et, à l'état débrayé sous l'influence de l'accumulateur d'énergie d'embrayage, font passer le fluide d'actionnement, lorsque la soupape n'est pas actionnée, du raccord (A) utile au raccord (T) de réservoir, avec une première section transversale d'ouverture jusqu'à l'obtention de la position (32) de butée et avec une section transversale d'ouverture plus grande lorsque le piston (12) de la soupape continue à se déplacer en s'éloignant de la position (32) de butée en direction de l'armature (16) du dispositif (14) d'actionnement.

11. Utilisation suivant la revendication 10,
**caractérisée en ce qu'**après le débrayage complet, le piston (12) de la soupape se trouve dans une sorte d'état indifférent, de sorte que, pour actionner l'embrayage par une mise en circuit renouvelée du dispositif (14) d'actionnement, une force magnétique minimum est suffisante pour faire aller le piston (12) de la soupape dans sa position de butée jusqu'à toucher le corps (14, 40) de butée.
